# EUROPEAN PATENT APPLICATION

(11) **EP 1 700 555 A2**
(43) Date of publication of application: **13.09.2006**
(21) Application number: 06110100.2
(22) Date of filing: 17.02.2006
(51) Int. Cl.: A47K 3/40

(54) **Water conveying and draining device**

(30) Priority: 25.02.2005 IT MI20050302
(71) Applicant: American Standard Europe SPRL, 1160 Brussels (BE)
(72) Inventor: Sadler, Marc Jean Jacques, 20144, MILAN (IT)
(74) Representative: Coppo, Alessandro

(57) **Abstract**

The present invention relates to a device (100) for the conveying and draining of water in a sanitary fixture equipped with a decoupling basin (2), a drain opening (1) placed on the bottom of the basin (2) and connectable to a drain duct, and at least one covering element (3) which can be closed on the basin (2) to produce at least one draining slit (7) suitable for making the water flow inside the basin (2).

## Description

The present invention relates to a water conveying and draining device and in particular a conveying and draining device for showers, washbasins, kitchen sinks and sanitary fixtures in general.

The conveying and draining systems in traditional sanitary fixtures are represented by a substantially circular hole, possibly covered by a grid, situated on the bottom of the sanitary fixture.

The circular hole is connected, in a known manner, to a draining duct which allows the water down-flow. The particular shape of the bottom of the sanitary fixture, deliberately converging towards said hole, allows the draining of the accumulated water.

The present systems however are normally dimensioned for the draining of a normal water flow, i.e. with the tap not at its maximum opening capacity.

The maximum opening of the taps causes a water accumulation on the bottom of the sanitary fixture which cannot be rapidly disposed of.

The water stagnating on the bottom creates an undesired effect, especially in shower basins.

In view of the above, the necessity is felt for availing of a water conveying and draining device, such as that according to the present invention, which improves the drainage efficiency of the traditional systems.

An objective of the present invention is therefore to solve the drawbacks of the known art by providing a draining device, such as that according to the present invention, which improves the efficiency of traditional draining systems and which can, at the same time, be installed in any sanitary fixture.

Another objective of the present invention is to provide a device for the conveying and draining of water, which prevents water stagnation in undesired areas.

Yet another objective of the present invention is to provide a water conveying and draining device which is simple and economical to produce.

These and other objectives are achieved by a water conveying and draining device according to the present invention, which has the characteristics of the enclosed claim 1.

Further characteristics of the invention are specified in the subsequent claims.

Additional characteristics and advantages of the present invention will appear more evident from the present illustrative and non-limiting description, with reference to the enclosed drawings, in which:
- figure 1 shows a perspective view of a shower base comprising a water conveying and draining device according to the present invention;
- figure 2 shows an exploded perspective view of the shower base comprising a water conveying and draining device of figure 1;
- figure 3 shows an enlarged exploded perspective view of the shower base comprising the water conveying and draining device of figure 1;
- figures 3a-3c show a side view of different embodiments of slits produced by the coupling of the covering element with the basin element according to the present invention;
- figure 4 shows a perspective view of a shower base comprising a water conveying and draining device according to the present invention.

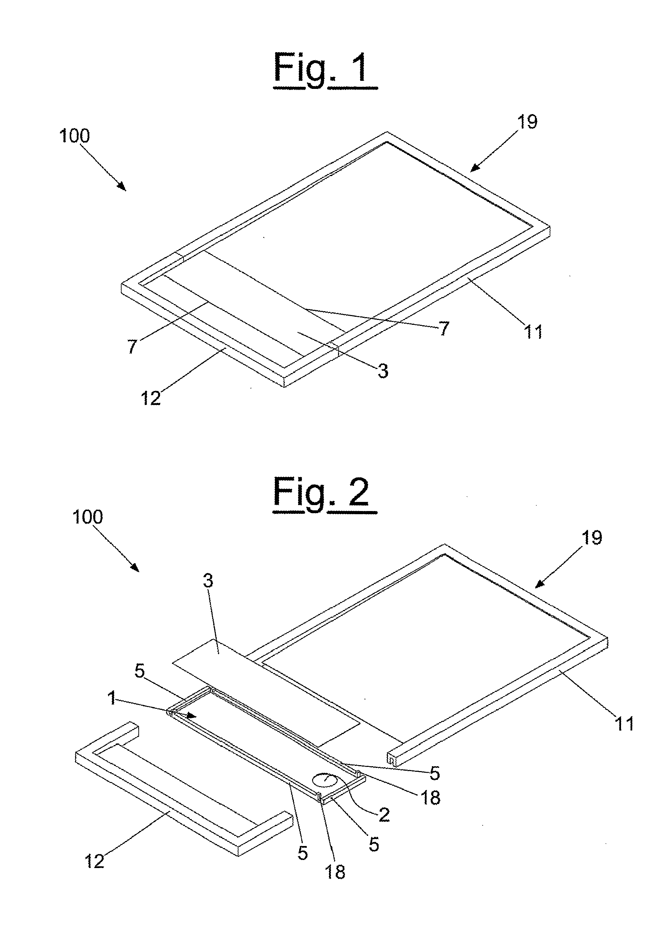

With reference to figures 1-4, these show a water conveying and draining device according to the present invention.

The water conveying and draining device, according to the present invention, indicated as a whole with the reference number 100, comprises a decoupling basin element 2, situated in a sanitary fixture, a drain opening 1 on the bottom of the basin element 2 connectable to a drain duct, not shown, and at least a covering element 3 which can be closed on the basin 2 to produce at least one draining slit 7 suitable for allowing the water to flow inside the basin 1.

The covering element 3 according to the present invention, is advantageously represented by an entirely continuous upper surface, i.e. without slits or openings, forcing the water to flow through the slit(s) 7 formed by the coupling between the covering element 3 and the basin element 2.

The description hereunder refers to an application in a shower base 19, even if it is obviously not limited to this specific use but can be relate to any sanitary fixture such as sinks, bath tubs or washbasins, etc.

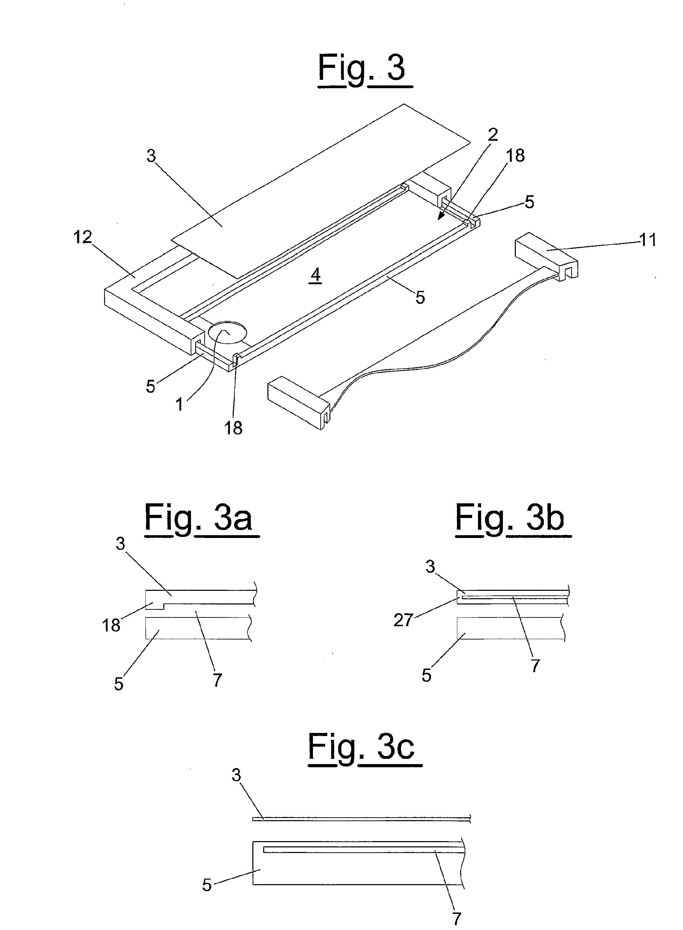

As is clearly visible in figure 3, the bottom of the basin 1 has at least one slope 4 in the direction of the drain opening 1 suitable for conveying the water collected by the basin element 2 towards the opening 1.

It should be noted that in order to form the slits 7, from the coupling between the covering element 3 and the basin element 2, the latter has slightly larger dimensions than those of the covering element 3.

As mentioned above, the water conveying and draining device 100 according to the present invention, can be envisaged, but not exclusively, for use in a shower base 100.

For this purpose, the shower base 19 has at least two connectable portions 11, 12, suitable for defining a housing which is shaped and dimensioned for receiving the basin element 2.

According to an alternative embodiment, the shower base 10 has at least two connectable portions 11, 12, for defining the basin element 2.

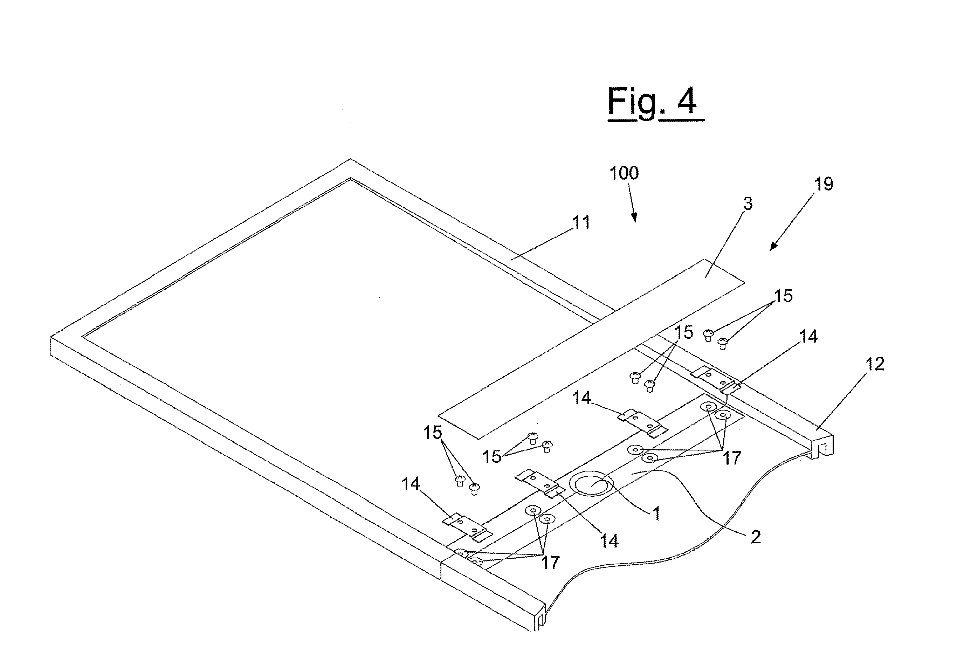

In other words, according to this embodiment, shown in figure 4, the basin element 1 is integral with the two shower base portions 11, 12.

Specific fixing means 13, such as brackets 14 and screws 15 are present for coupling the two portions 11, 12.

The brackets 14 are situated between the two portions 11, 12, whereas the screws 15 are in correspondence with seats 16 envisaged on the brackets 14 and in corresponding seats 17 on the portions 11, 12 to ensure the coupling position.

The brackets 14 also act as a support for the covering element 3 which, once coupled with the basin element 2, is perfectly in line with the shower base.

According to another embodiment, shown in figures 1-3, the basin element 2 comprises side walls 5 which can be coupled with said covering element 3 to form at least one side draining slit 7.

For this purpose, the walls 5 have small protruding elements 18 suitable for resting against the covering element 3 to prevent this from leaning on the walls 5 of the basin element 2 obstructing the water flow.

Alternatively, the protruding elements 18 can be envisaged on the covering element 3 and in this case will rest on the walls 5 of the basin element 1, as shown in figure 3a.

According to another embodiment, the flow slits 7 can be situated directly on the wide walls 5 of the basin element 2, as shown in figure 3c, or possibly on edges 17, protruding downwards towards the covering element 3, as shown in figure 3b.

It should be noted that there are two slits 7, produced by the coupling between the side walls 5 of the basin element 2 and the covering element 3, and they are arranged on opposite sides of the basin element 2, but can also be situated on all the sides of the basin element 2 and covering element 3 without being excluded from the protection scope of the present invention.

As mentioned above, the draining device according to the present invention, can be applied to any type of sanitary fixture, such as washbasins, bidets, bath tubs, all included in the protection scope of the present invention.

The draining device can have additional elements such as, for example, a further plug, not shown and described, as already known to experts in the field.

From the above description, with reference to the figures, it is evident how a draining device according to the present invention is particularly useful and advantageous. The objective indicated in the preamble of the description has thus been achieved.

The forms of the invention can obviously differ from those shown for purely illustrative and non-limiting purposes in the drawings, i.e. square, circular or irregular shapes, as also the materials.

The protection scope of the invention is therefore delimited by the enclosed claims.

## Claims

1. A water conveying and draining device (100) for a sanitary fixture **characterized in that** it comprises a decoupling basin element (2), arranged in a sanitary fixture, a drain opening (1) situated on the bottom of said basin (2) and connectable to a drain duct, and at least one covering element (3) which can be closed on said basin element (2) to form at least one drain slit for allowing the water to flow inside said basin (1).

2. The water conveying and draining device (100) according to claim 1, **characterized in that** the bottom of said basin element (2) comprises at least one slope (4) in the direction of said drain opening (1) for conveying the water collected by said basin element (2) towards said opening (1).

3. The water conveying and draining device (100) according to claim 1 or 2, **characterized in that** said covering element (3) comprises an entirely continuous upper surface.

4. The water conveying and draining device (100) according to any of the previous claims, **characterized in that** said draining basin element (2) has larger dimensions with respect to the dimensions of said covering element (3) to produce, coupled with said covering element, at least one draining slit (7).

5. The water conveying and draining device (100) according to any of the previous claims 1-4, **characterized in that** said draining basin element (2) comprises side walls (5) which can be coupled with said covering element (3) to form at least one side draining slit (7).

6. The water conveying and draining device (100) according to claim 5, **characterized in that** said walls (5) of said basin element (2) can be coupled with said covering element (3) to form two side draining slits (7).

7. A shower base (19) **characterized in that** it comprises at least one water conveying and draining device (100) according to any of the previous claims.

8. The shower base (19) according to claim 7, **characterized in that** it comprises at least two connectable portions for defining a housing suitable for receiving said basin element (2).

9. The shower base according to claim 7, **characterized in that** it comprises at least two connectable portions (11, 12) for defining said basin element (2).

10. A sanitary fixture, **characterized in that** it comprises a housing for a basin element (2) according to any of the previous claims.

11. A sanitary fixture, **characterized in that** it comprises a water conveying and draining device (100) according to any of the previous claims.
